# EUROPEAN PATENT APPLICATION

(11) **EP 4 156 065 A1**
(43) Date of publication of application: **29.03.2023**
(21) Application number: 22181322.3
(22) Date of filing: 27.06.2022
(51) Int. Cl.: G06Q 30/02, G06N 20/00

(54) **SUBSCRIBER RETENTION AND FUTURE ACTION PREDICTION**

(30) Priority: 28.09.2021 US 202117487513
(71) Applicant: Intuit Inc., Mountain View, CA 94043 (US)
(72) Inventor: MENG, Xiangling, Mountain View, 94043 (US); WU, Grace, Mountain View, 94043 (US)
(74) Representative: D Young & Co LLP

(57) **Abstract**

Systems and methods of subscriber retention analysis are disclosed. A system is configured to obtain an instance of a current subscriber data for the first current subscriber subscribed to a product for a first amount of time and configured to provide the first instance of the current subscriber data to a machine learning (ML) classification model. Training the ML classification model is based on a plurality of data sets as training data. Each data set includes an instance of historic subscriber data over the first amount of time of a subscription for a historic subscriber. The system is also configured to generate, using the ML classification model, a predicted likelihood in retaining the first current subscriber based on the first instance of the current subscriber data.

## Description

### CROSS-REFERENCE TO RELATED APPLICATIONS

This Patent Application claims priority to U.S. Patent Application No. 17/487,513 entitled "SUBSCRIBER RETENTION AND FUTURE ACTION PREDICTION" and filed on September 28, 2021, which is assigned to the assignee hereof. The disclosures of all prior Applications are considered part of and are incorporated by reference in this Patent Application.

### TECHNICAL FIELD

This disclosure relates generally to modelling subscriber retention for a product or service, including generating subscriber retention forecasts and future recommended actions to be performed that are associated with the forecasts.

### DESCRIPTION OF RELATED ART

A product or service may be based on a subscriber model. For example, a subscription based music or video streaming service, online financial planner or accounting product, document processing tools, home warranty service, on-call exterminator service, and so on include subscribers paying a monthly or annual fee to use the product or service. An entity providing a subscription based product or service is to retain subscribers over time by ensuring subscriber desire to use and subscriber satisfaction with the product or service is met. Forecasting subscriber retention and churn, in which a subscriber activates and subsequently cancels a subscription, for the corpus of subscribers and potential new subscribers is helpful to the entity in analyzing the product or service.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter. Moreover, the systems, methods, and devices of this disclosure each have several innovative aspects, no single one of which is solely responsible for the desirable attributes disclosed herein.

One innovative aspect of the subject matter described in this disclosure can be implemented as a computer-implemented method for subscriber retention. The method includes obtaining a first instance of a current subscriber data for the first current subscriber. The first current subscriber is subscribed to a product for a first amount of time. The method also includes providing the first instance of the current subscriber data to a machine learning (ML) classification model. Training the ML classification model for a current subscriber associated with the first amount of time includes, for each historic subscriber of a plurality of historic subscribers that are subscribed to the product for an amount of time longer than the first amount of time, obtaining historic subscriber data for the historic subscriber and generating a first data set of historic subscriber data over the first amount of time from a product subscription start for the historic subscriber. Training the ML classification model also includes using the plurality of first data sets as training data. The method for subscriber retention further includes generating, using the ML classification model, a predicted likelihood in retaining the first current subscriber based on the first instance of the current subscriber data. In some implementations, the method further includes binning the predicted likelihood into one of a plurality of bins based on a distribution of predicted likelihoods for a plurality of current subscribers including the first current subscriber. The method may also include using the bin associated with the predicted likelihood for the first current subscriber to identify one or more actions to be performed for the first current subscriber.

Another innovative aspect of the subject matter described in this disclosure can be implemented in a system for subscriber retention. An example system includes one or more processors and a memory storing instructions that, when executed by the one or more processors, cause the system to perform operations. The operations include obtaining a first instance of a current subscriber data for the first current subscriber. The first current subscriber is subscribed to a product for a first amount of time. The operations also include providing the first instance of the current subscriber data to a machine learning (ML) classification model. Training the ML classification model for a current subscriber associated with the first amount of time includes, for each historic subscriber of a plurality of historic subscribers that are subscribed to the product for an amount of time longer than the first amount of time, obtaining historic subscriber data for the historic subscriber and generating a first data set of historic subscriber data over the first amount of time from a product subscription start for the historic subscriber. Training the ML classification model also includes using the plurality of first data sets as training data. The operations further include generating, using the ML classification model, a predicted likelihood in retaining the first current subscriber based on the first instance of the current subscriber data. In some implementations, the operations further include binning the predicted likelihood into one of a plurality of bins based on a distribution of predicted likelihoods for a plurality of current subscribers including the first current subscriber. The operations may also include using the bin associated with the predicted likelihood for the first current subscriber to identify one or more actions to be performed for the first current subscriber.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

Figure 1 shows an example system to forecast subscriber retention and initiate one or more actions associated with the forecast, according to some implementations.
Figure 2 shows an illustrative flow chart depicting an example operation for generating a predicted likelihood of retaining a first current subscriber to a product, according to some implementations.
Figure 3 shows an illustrative flow chart depicting an example operation for training a machine learning (ML) classification model, according to some implementations.
Figure 4 shows an illustrative flow chart depicting an example operation for identifying a behavior indicator to be adjusted to adjust a predicted likelihood, according to some implementations.

Like numbers reference like elements throughout the drawings and specification.

### DETAILED DESCRIPTION

Implementations of the subject matter described in this disclosure may be used for modelling subscriber retention for a product or service. In particular, systems and methods to generate forecasts for subscriber retention are described, including using the forecasts to initiate one or more actions to be performed for specific subscribers. Generation of the forecasts is based on a machine learning (ML) model that is trained for generating forecasts for specific types of subscribers. Also described are systems and methods to generate future recommended actions to be performed based on the forecasts to increase the likelihood of retaining one or more subscribers.

An entity that provides a product on a subscription basis is concerned about retaining subscribers and ensuring that subscribers are satisfied with the product. For example, an entity providing a streaming service is to maximize subscriber retention by providing content, features, and support that meets the subscribers' wants in the streaming service. In another example, an entity providing accounting software on a subscription basis is to maximize subscriber retention by providing financial tools in an easy to use format, educating the subscribers on awareness of the tools available and on use of the tools, and providing other features to assist the subscribers in using the tools to meet the subscribers' needs. As used herein, a product may refer to a software (which may be local or remote (such as cloud based)), a service (which may include software as a service (SaaS)), or any other suitable object provider to users on a subscription basis.

While some subscribers may proactively reach out to the entity to request changes to the product or otherwise indicate their satisfaction with the product, many subscribers do not indicate their wish to not continue subscribing to the product until they cancel their subscription. An entity may attempt to forecast whether subscribers are likely to be retained or whether subscribers are likely to cancel subscriptions. For example, an entity may use retention and cancellation trends to forecast a total number of subscribers to the product at some point in the future. An entity may also attempt to forecast subscriber retention at a more granular level, such as at the subscriber level. For example, the entity may use a model to forecast whether a specific subscriber may cancel his or her subscription based on information for the subscriber and for other subscribers to the product (such as the last time the product was used by the subscriber, the frequency of the product use by the subscriber, specific actions performed by the subscriber with the product, and so on).

Forecasting accuracy by a model is based on the input data to the model. If a product has more subscribers similar to a subscriber of interest, there exists more subscription data as reference to forecast a likelihood of retaining the subscriber of interest. An increase in reference data increases the accuracy in the forecast for the subscriber of interest. For example, a forecast that is generated based on reference data for 1,000 subscribers is in general more accurate than a forecast that is generated based on reference data for 1 subscriber.

An entity may forecast a likelihood of retaining a subscriber using a machine learning (ML) model that is trained to generate a likelihood prediction in retaining the subscriber. If the ML model is trained using reference data for other subscribers as the training data, training the ML model using more training data may increase the accuracy of the predictions by the ML model. For example, the machine learning model generates more accurate predictions if the ML model is trained using reference data for 1,000 subscribers as compared to being trained using reference data for 1 subscriber.

One problem with obtaining training data for subscription based products is regarding newer subscribers that has subscribed to the product within the last several weeks. In general, retention rates and product usage characteristics of newer subscribers (also referred to as first time users (FTUs)) differ from retention rates and product usage characteristics of more established subscribers (also referred to as non-FTUs). For example, a newer subscriber may be more likely to use the subscription on a trial basis to try the product and thus cancel his or her subscription after trying the product. A newer subscriber may also be more engaged with the product while first interacting with and learning how to use the product. As such, a ML model trained for established subscribers may be poor in generating a prediction for a newer subscriber. However, the entity may not have sufficient training data for similar subscribers as the newer subscriber to train an ML model for newer subscribers (such as the entity not having a sufficient number of newer subscribers that canceled their subscription and of newer subscribers that retained their subscription). As such, there is a need for a ML model that is sufficiently trained to generate a prediction for newer subscribers.

Another problem is that an entity desires to know of actions that can be taken to improve a subscriber's satisfaction or to otherwise increase the likelihood that the subscriber is to be retained. For example, a ML model may use a large corpus of data including various types of data (including, e.g., various subscriber usage metrics and various subscriber demographic information) that may or may not impact the predictions. In addition, different types of data can be impacted through actions that the entity can take while other types of data cannot. For example, an entity reaching out to a subscriber to get his or her feedback, proactively ask if any assistance can be provided, or otherwise to interact with the subscriber may increase the subscriber's use of the product (such as time spent using the product or specific actions being performed with the product) but does not change other some other types of subscriber information (such as the location of the subscriber or the specific needs of the subscriber that the product is to meet). To improve a likelihood in retaining a subscriber, there is a need for an entity to know what types of data impact a prediction, whether the types of data impacting the prediction may be adjusted, and what actions may be performed by the entity to adjust such data.

Various implementations of the subject matter disclosed herein provide one or more technical solutions to the technical problem of machine learning based predictions for subscriber retention. Some implementations of the subject matter provide one or more technical solutions to obtaining a sufficient set of training data to train an ML classification model for generating a predicted likelihood of retaining a current subscriber. In some implementations, a computing system is configured to obtain a first instance of a current subscriber data for a first current subscriber (with the first current subscriber subscribed to a product for a first amount of time). The computing system is also configured to provide the first instance of the current subscriber data to an ML classification model. Training the ML classification model for a current subscriber associated with the first amount of time includes, for each historic subscriber of a plurality of historic subscribers that are subscribed to the product for an amount of time longer than the first amount of time, obtaining historic subscriber data for the historic subscriber and generating a first data set of historic subscriber data over the first amount of time from a product subscription start for the historic subscriber. Training the ML classification model also includes providing the plurality of first data sets to the ML classification model and training the ML classification model using the plurality of first data sets as training data. The computing system is also configured to generate, using the ML classification model, a predicted likelihood in retaining the first current subscriber based on the first instance of the current subscriber data. In this manner, a sufficient amount of subscriber data to train the ML classification model for a FTU may be obtained without requiring a large number of FTUs (such as the subscriber data relevant to the FTU being obtained from non-FTU subscriber data).

Some implementations of the subject matter provide one or more technical solutions to determining which types of subscriber data can be adjusted to impact the predicted likelihood and to determining one or more actions to be performed to increase the predicted likelihood based on the types of subscriber data that can be adjusted. The subscriber data for a subscriber may include one or more behavior indicators of the subscriber. Each behavior indicator is associated with a metric of subscriber interaction with the product (such as amount of time the product is used, number of actions performed in the product, and so on, and a data set of subscriber information for a subscriber (which is provided to the ML classification model) may include the behavior indicators. In some implementations, a computing system is configured to, for the first current subscriber, obtain an indication of at least one of the one or more behavior indicators that are adjustable. The computing system is also configured to identify a behavior indicator of the at least one behavior indicator to be adjusted to adjust the predicted likelihood generated using the ML classification model. For example, the computing system may iteratively adjust one or more behavior indicators and regenerate a predicted likelihood for the first current user to determine an increased predicted likelihood and which behavior indicators are to be adjusted (and by how much) to cause the increased predicted likelihood. Each of the one or more behavior indicators that are adjustable may be associated with one or more actions that may be performed by the entity to cause an adjustment to the behavior indicator. The identified behavior indicators to be adjusted and actions associated with adjusting the behavior indicators may be indicated to the entity or otherwise initiated. With the actions performed, the predicted likelihood in retaining the first current subscriber may increase, indicating an increased chance of retaining the first current subscriber as a customer.

Various aspects of the present disclosure provide a unique computing solution to a unique computing problem that did not exist prior to the creation of machine learning models. As such, implementations of the subject matter disclosed herein are not an abstract idea such as organizing human activity or a mental process that can be performed in the human mind. Training a machine learning model and using the machine learning model to generate a prediction cannot be performed in the human mind, much less using pen and paper.

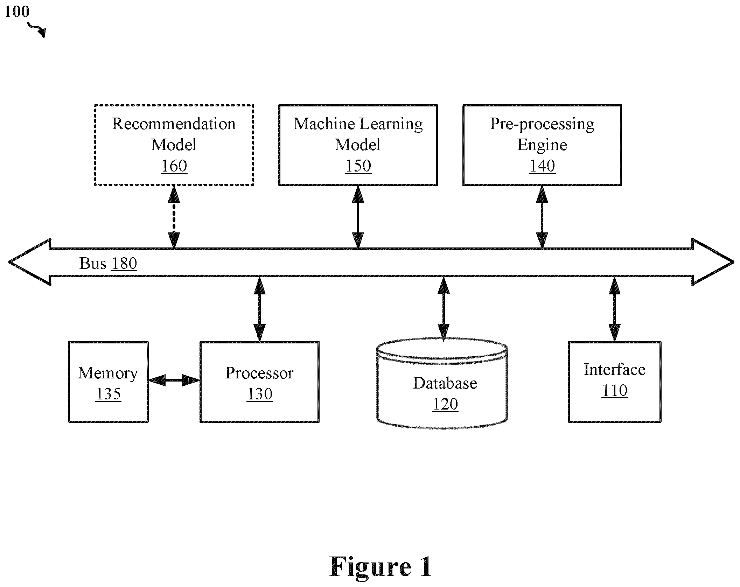

Figure 1 shows an example system 100 to forecast subscriber retention and initiate one or more actions associated with the forecast, according to some implementations. The system 100 includes an interface 110, a database 120, a processor 130, a memory 135 coupled to the processor 130, a pre-processing engine 140, and a ML model 150. The system 100 may also include a recommendation model 160. In some implementations, the various components of the system 100 may be interconnected by at least a data bus 180, as depicted in the example of Figure 1. In other implementations, the various components of the system 100 may be interconnected using other suitable signal routing resources.

The interface 110 may be one or more input/output (I/O) interfaces to obtain subscriber data associated with historic subscribers and current subscribers to a product. As used herein, a current subscriber refers to a person, an organization, a business, or other entity that is currently subscribed to the product. A previous subscriber refers to a person, an organization, a business, or other entity that was previously subscribed to the product but is no longer subscribed to the product. A historic subscriber may be a previous subscriber or a current subscriber. The interface 110 may also provide one or more predictions generated by the system 100, an indication of one or more actions to be performed based on the predictions, instructions to cause one or more actions to be performed by another system, an indication of one or more behavior indicators impacting the predictions, an indication of one or more actions to be performed to adjust the one or more behavior indicators, or instructions to cause one or more actions to adjust the one or more behavior indicators to be performed by another system. An example interface may include a wired interface or wireless interface to the internet or other means to communicably couple with other devices. For example, the interface 110 may include an interface with an ethernet cable or a wireless interface to a modem, which is used to communicate with an internet service provider (ISP) directing traffic to and from user devices (such as a user's personal computer). As used herein, a "user" may refer to a subscriber or an agent of the subscriber. For example, if the subscriber is a small business, a user may refer to the business owner, an employee of the business, or another agent of the business.

As noted above, the system 100 is configured to generate a predicted likelihood of retaining a current user based on current subscriber data for the current user and historic subscriber data for a plurality of historic subscribers (which may include current or previous subscribers). The system 100 also may be configured to perform one or more additional operations based on the predicted likelihood. Subscriber data used for generating the predicted likelihood may be any suitable data regarding the subscriber. In some implementations, subscriber data includes demographic information and behavior indicators. Demographic information includes information regarding a subscriber that is not associated with the subscriber's interaction with the product. For example, demographic information may include how long the subscriber is subscribed to the product, the specific product or portions of the product to which the subscriber is subscribed (such as if the product includes multiple portions to which require a separate subscription), the size of the company if the company is the subscriber, employment of a personal subscriber, when the subscription began (such as more than 62 days ago, during a specific season, or during a specific special), whether the subscription was via an affiliate or directly from the entity providing the product, location of the subscriber, subscriber age, and so on.

For clarity in describing aspects of the present disclosure, the examples depicted herein refer to Intuit^{®} QuickBooks Online (QBO) software as the product. However, any suitable product may be used in performing aspects of the present disclosure. Regarding QBO as the product, demographic information includes days subscribed to QBO, to which portions of QBO are subscribed (such as whether the subscription is an Essentials, Plus, or Advanced subscription to QBO offering different levels of tools and controls for the subscriber), or whether the subscriber is a business, a small business, or an individual (such as whether the subscription is a Self-Employed or an Enterprise subscription to QBO).

Behavior indicators include information indicating subscriber usage of the product. Each of the behavior indicators may indicate any suitable type of interaction with the product. Example behavior indicators may include amount of time that the subscriber interacts with the product, number of times the subscriber logs into the product, number of actions performed in the product (such as number of shows watched in a streaming service), or number of applications connected to the product (such as number of streaming devices registered to a streaming service for a subscription). Regarding QBO as the product, an example behavior indicator includes amount of time using QBO, number of times accessing QBO, number of invoices created in QBO, number of articles viewed as provided by QBO, number of devices (such as different computers, smartphones, or tablets) used to access QBO, or number of applications connected to QBO (such as a tax return preparation application, an online banking application for a bank account of the subscriber, and so on). A behavior indicator may be time variant. For example, a subscriber may login to QBO multiple times in one day and not login to QBO the next day. In another example, the number of invoices created may be greater on days towards the end of a month than on days towards the beginning of the month.

In some implementations, a behavior indicator of subscriber data includes a plurality of values associated metrics of subscriber interaction with the product. Each value of the plurality of values associated with a metric indicates a measurement of the metric for the subscriber for a period of time. The period of time may be any suitable length of time, such as hourly, daily, weekly, and so on. For example, an example behavior indicator for QBO may be a daily measurement of the number of times the subscriber logs into QBO, a daily measurement of the number of invoices generated using QBO, and so on. For clarity in describing aspects of the present disclosure, the examples depicted herein refer to daily measurements as being the amount of time for measurements. However, any suitable amount of time may be used.

In some implementations, the system 100 is configured to provide the product to a plurality of subscribers. For example, for an online product accessed via a web portal or other means for accessing the system 100, the system 100 hosts the product. In this manner, subscriber interactions with the product occur at the system 100. The interface 110 obtaining subscriber data may include obtaining requests from one or more subscribers to perform one or more actions for the product. Behavior indicators for a subscriber may be associated with daily interactions by the subscriber with the product hosted by the system 100 (such as number of times in a day a subscriber logs into the system 100, the number of invoices generated in a day for the subscriber, and so on), and the system 100 may be configured to generate the behavior indicators. Demographic information for the subscriber may be associated with signup information when activating the subscription to the product (such as the date the subscription begins, provided location of the subscriber at signup, and so on), and the system 100 may be configured to generate the demographic information.

In some implementations, the product is housed in a different system than system 100. For example, an online product may be hosted on one or more servers or in a cloud based means for an entity providing the product, and the system 100 may be a separate system of the entity used to predict likelihoods of retaining one or more subscribers. The interface 110 obtaining subscriber data may include obtaining reports or other data formats of subscriber data associated with behavior indicators from one or more systems hosting the product. For example, the one or more systems may store a log of subscriber interactions with the product (such as when the subscriber logs in, actions performed for the subscriber, and so on). The one or more systems may provide the log of subscriber interactions in one or more JavaScript Object Notation (JSON) files or another suitable computer readable format to the system 100. Demographic information may be based on subscriber data stored at a system of the entity configured to manage the subscriber accounts. The subscriber data for the demographic information may be provided to the system 100 in one or more JSON files or another suitable computer readable format. In some implementations, the behavior indicator associated subscriber data may be provided to the system managing the subscriber accounts for subscriber activity information to be stored with other subscriber account information. The system managing subscriber accounts may store subscriber data for current subscribers as well as for previous subscribers. In this manner, the behavior indicator associated subscriber data may also be provided by the system managing the subscriber accounts to the system 100, and the subscriber data being obtained by the system 100 may be for any suitable portion or for all historic subscribers (including previous subscribers and current subscribers) to the product. Subscriber data for previous subscribers includes when the subscription was deactivated. The subscriber data may also include the reason for deactivation (such as whether the subscription was actively canceled by the subscriber, was not renewed by the subscriber, was canceled by the entity for non-payment, and so on). Subscriber data may be obtained by the interface 110 at any suitable interval, such as daily. For example, the interface 110 may obtain any new subscriber data from any suitable system hosting the product or managing subscriber accounts each night.

As noted above, the interface 110 may also be configured to provide an indication of one or more predictions or retaining one or more current subscribers based on the obtained subscriber data and, in some implementations, provide an indication of one or more actions to be taken based on the one or more predictions, one or more behavior indicators to be adjusted to adjust the one or more predictions, or one or more actions to be taken to adjust the one or more behavior indicators. As used herein, a prediction may be referred to as a predicted likelihood. The information provided by the interface 110 may be provided to a local user. For example, the interface 110 may include a display, a speaker, a mouse, a keyboard, or other suitable input or output elements that allow interfacing with the user to provide the information to the user.

The database 120 may store the subscriber data obtained by the interface 110. The subscriber data may be stored in a state as obtained by the interface 110 (such as storing the JSON files as received) or may store the subscriber data after being processed into a form to be used by the ML model 150 and the recommendation model 160. The database 120 may also store one or more predictions generated by an ML model 150, one or more outputs of the recommendation model 160, one or more applications to be executed by the system 100, or one or more configurations for the ML model 150 or the recommendation model 160. In some implementations, the database 120 may include a relational database capable of presenting information as data sets in tabular form and capable of manipulating the data sets using relational operators. The database 120 may use Structured Query Language (SQL) for querying and maintaining the database 120. While the examples herein depict operations to be performed by the system 100 with reference to a first current subscriber for clarity purposes, the system 100 may be configured to perform operations associated with any number of current subscribers (such as generating predictions for a plurality of current subscribers).

The processor 130 may include one or more suitable processors capable of executing scripts or instructions of one or more software programs stored in system 100 (such as within the memory 135). For example, the processor 130 may be capable of executing one or more applications, the pre-processing engine 140, the ML model 150, or the recommendation model 160. The processor 130 may include a general purpose single-chip or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. In one or more implementations, the processors 130 may include a combination of computing devices (such as a combination of a DSP and a microprocessor, a plurality of microprocessors, one or more microprocessors in conjunction with a DSP core, or any other such configuration).

The memory 135, which may be any suitable persistent memory (such as non-volatile memory or non-transitory memory) may store any number of software programs, executable instructions, machine code, algorithms, and the like that can be executed by the processor 130 to perform one or more corresponding operations or functions. For example, the memory 135 may store the one or more applications, the pre-processing engine 140, the ML model 150, or the recommendation model 160 that may be executed by the processor 130. The memory 135 may also store the subscriber data before or after processing by the pre-processing engine 140, outputs from the ML model 150, outputs from the recommendation model 160, or any other data for operation of the components 140-160. For example, the memory 135 may store subscriber data obtained from the database 120 for the processor 130 to perform operations of the components 140-160. After performing the operations, the output of the operations is provided by the processor 130 to the memory 135, and the output is then provided from the memory 135 to the database 120. In some implementations, hardwired circuitry may be used in place of, or in combination with, software instructions to implement aspects of the disclosure. As such, implementations of the subject matter disclosed herein are not limited to any specific combination of hardware circuitry and/or software.

The ML model 150 includes one or more ML models used to generate predicted likelihoods of retaining current subscribers. To generate a predicted likelihood for a first current subscriber, a ML model is trained using historic subscriber data of one or more historic subscribers as training data. The trained ML model is provided the current subscriber data for the first current subscriber to generate the predicted likelihood. A predicted likelihood may be for a specific time in the future, such as the likelihood that a subscriber is to cancel within the next 30 days, the next 60 days, and so on.

In some implementations, training the ML model may include supervised training. For example, the historic subscriber data includes an indication for each historic subscriber as to whether the historic subscriber is a current subscriber or a previous subscriber. The historic subscriber data for previous subscribers also may include when the subscription was deactivated. The ML model may be an ML classification model, and such historic subscriber data may be used as a desired output of the ML classification model to train the ML classification model to predict classifying whether the historic subscribers are to be current subscribers or previous subscribers based on subscriber data. An ML classification model may be any suitable model and may be based, e.g., on one or more of decision trees, gradient boosted trees, random forests, or other classification trees. In some implementations, the ML classification model is a gradient boosted tree model. For example, the XGBoost software library may be used to generate the ML classification model configured to output a predicted likelihood of retaining a current subscriber. While the ML classification model is described herein as being a gradient boosted tree model for clarity, the ML model may be any suitable ML model, which may be based on, e.g., any of the classification models listed above, logistic regression, nearest neighbors, control flow graphs, support vector machines, naive Bayes, Bayesian Networks, value sets, hidden Markov models, or neural networks configured to generate predictions.

As used herein, the one or more ML classification models of the ML model 150 may be referred to as being "untrained," but an ML classification model being untrained may refer to the ML classification model be initially trained in a general manner using the entirety of historic subscriber data and other information from the entity. In this manner, the initially trained ML classification model is not configured specifically for generating predictions for a specific type of subscriber (such as an FTU or a non-FTU). As such, the predictions from the initially trained ML classification model (also referred to as an untrained ML classification model) may be less accurate than desired. As used below, training the ML classification model may refer to configuring the initially trained ML classification model for a specific type of subscriber (such as an FTU or a non-FTU). Training the ML classification model may include providing data sets of historic subscriber data associated with a specific type of subscriber and other constraints (which is referred to herein as being included in the training data for training the ML classification model) to the ML classification model to configure the ML classification model for a specific type of subscriber (and thus to generate more accurate predictions for the specific type of subscriber). As used below, "training the ML classification model" may include one or more of training the ML model in a traditional sense (such as in initially training the ML classification model) or using the training data as an additional input to the initially trained ML classification model, with changes in the additional input causing a change in the predicted likelihood generated by the ML classification model. As such, training the ML classification model is not limited to a specific means of configuring the ML classification model for a specific subscriber.

The ML model 150 is configured to use subscriber data (such as historic subscriber data as training data or current subscriber data to generate a prediction for a first current subscriber) in a specific format. If the subscriber data as obtained by the interface 110 is in the format to be used by the ML model 150, the subscriber data may be provided directly to the ML model 150 from the interface 110 or from the database 120 without pre-processing to place the subscriber data into a suitable format. In some implementations, the subscriber data as obtained by the interface 110 may not be in the format to be used for the ML model 150. For example, the ML model 150 may be configured to use a data set of historic subscriber data for each subscriber that is in a specific format.

The pre-processing engine 140 processes the subscriber data obtained by the interface 110 or stored in the database 120 to place the subscriber data for a subscriber into a formatted data set acceptable for use by the ML model 150. The format of the data set to be used by the ML model 150 may be any suitable format. For example, a data set for a subscriber may include a vector of values. Each position in the vector may be associated with a specific demographic information or a specific behavior indicator. If demographic information is from subscriber data from a system managing subscriber accounts, the pre-processing engine 140 may process the subscriber data obtained from the other system into values of the vector associated with the demographic information. For example, one position of the vector is to indicate whether the subscriber is still subscribed to the product. The information from the other system may be used to set the position in the vector to a defined value indicating whether the subscriber is still subscribed to the product (such as 0 to indicate that the subscriber is still subscribed or 1 to indicate that the subscriber is no longer subscribed). Another position of the vector is to indicate the location of the subscriber. The residence address or other location information for the subscriber may be used to set the position in the vector to a zip code, and area code, or any other defined value for a geographic location that may be used by the ML model 150.

Behavior indicators may be obtained by the interface 110 in obtaining the subscriber data. As noted above, each behavior indicator may include a plurality of values, and the subscriber data obtained by the interface 110 may include the plurality of values for each behavior indicator. For example, if a system managing subscriber accounts also stores subscriber data (which includes subscriber transaction logs from one or more servers hosting the product), the system may process the transaction logs to determine the plurality of values for various behavior indicators for a subscriber (such as number of times the subscriber logs into the product each day, the number of invoices generated for a subscriber each day, and so on). The system managing the subscriber accounts then provides the plurality of values of the various behavior indicators to the system 100 (such as daily after generating any new values for each behavior indicator).

In some implementations, the interface 110 obtaining subscriber data may include obtaining the transaction logs themselves from the one or more servers hosting the product. In this manner, the pre-processing engine 140 processes the transaction logs to generate the plurality of behavior indicators from the transaction logs. The system 100 may periodically obtain updated transaction logs (such as daily), and the pre-processing engine 140 may generate new values for the behavior indicators after obtaining the updated transaction logs.

Referring back to the ML model 150, the ML model 150 may include a plurality of models trained for different types of subscribers. In some implementations, the ML model 150 includes an ML classification model for FTUs (such as current subscribers who have been subscribed for less than 62 days to QBO) and an ML classification model for non-FTUs (such as current subscribers who have been subscribed for greater than 62 days to QBO). To note, the example of 62 days may refer to more than two months for a monthly subscription to a product. However, any suitable time demarcation may be used to differentiate between FTUs and non-FTUs. The reasons that a subscriber cancels a subscription, the propensity for a subscriber to cancel, and other factors contributing to a subscription being deactivated may differ between FTUs and non-FTUs. Therefore, an ML classification model trained for non-FTUs may provide less accurate predictions for an FTU than an ML classification model trained for FTUs. As described herein, the ML classification model for FTUs is the same ML classification model for non-FTUs but trained using different training data (such as a gradient boosted tree based model being trained using different training sets for the two different ML models). For example, the same initially trained ML classification model may be trained using a first training data for an FTU that differs from a second training data for a non-FTU such that the resulting FTU ML classification model differs from the resulting non-FTU ML classification model. However, any suitable ML models may be used for FTUs or for non-FTUs.

As noted above, a behavior indicator may be time-variant. As such, the values of the behavior indicator may vary between time periods (such as the number of invoices generated differing for different days). The format of the data set of subscriber information to be used by the ML model 150 (such as either the ML classification model for FTUs or the ML classification model for non-FTUs) may include the behavior indicators being processed to remove the variability for the data set to be ingested by the ML model 150. In some implementations, the pre-processing engine 140 generating a data set of subscriber information for a subscriber includes, for each behavior indicator, aggregating a plurality of values across an amount of time. Which values to aggregate may depend on whether an FTU ML classification model or a non-FTU ML classification model is to be used (such as described below). If the data set is a vector of values, a position in the vector associated with a specific behavior indicator may include a value that is an aggregation over an amount of time for the behavior indicator (such as number of invoices generated for a subscriber over the amount of time). In this manner, comparing a behavior indicator between subscribers includes comparing the aggregated value. While aggregation is described in the examples for clarity, any suitable combination operation may be performed, such as averaging, determining a median, and so on, in generating a data set of subscriber information.

As noted above, the ML classification model for FTUs may be the same classification model for non-FTUs but trained using different training data. The difference in training the ML classification models is based on different data sets being used. For example, data sets for non-FTUs may be used to generate the non-FTU ML classification model. In some implementations, the amount of time to be used for the non-FTU classification model is a static amount of time (such as 45 days). In this manner, the pre-processing engine 140 may aggregate the daily values for a behavior indicator for 45 days. If the behavior indicator is updated each day with a new value, the aggregation may be performed daily to update the data set. As such, the amount of time may be similar to a moving window of fixed size across the time series data of each behavior indicator.

The data sets to be used as training data for the non-FTU classification model may be based on similarities between candidate non-FTUs whose data sets may be used in the training data and the current non-FTU for which the non-FTU ML classification model is to generate a prediction. For example, the system 100 may limit the training data to data sets of non-FTUs in the same geographic location, within the same subscription length (such as subscribing in the same calendar year), of the same subscriber type (such as whether an individual or a small business), and other demographic information. Training data may also be limited to data sets of subscribers with similar behavior indicators (such as generating approximately the same number of invoices over an amount of time, logging into the product approximately the same number of time over an amount of time, and so on). A first value approximately equaling a second value refers to the first value being within a defined tolerance of the second value (such as the second value plus or minus five percent or another suitable tolerance). In some implementations, the pre-processing engine 140 generates a data set for each historic non-FTU and for the current non-FTU for which a prediction is to be generated. If each data set includes a vector with a first set of positions associated with demographic information, the first set of positions of the vector for the current non-FTU may be compared to the first set of positions of vectors for the historic non-FTUs to identify non-FTUs with matching demographic information. In addition, the second set of positions of the vector for the current non-FTU may be compared to the second set of positions of vectors for the historic non-FTUs to identify non-FTUs with matching behavior indicators. The system 100 may filter out the historic non-FTUs with non-matching demographic information to the current non-FTU. The system 100 may also filter out the historic non-FTUs with non-matching behavior indicators. The training data may be the remaining data sets of the historic non-FTUs with matching demographic information and behavior indicators to the current non-FTU.

For training the FTU ML classification model for a current FTU not yet subscribed to the product for a defined amount of time used for identifying non-FTUs (such as 62 days), the amount of time to be used for aggregating a behavior indicator in generating the data sets may be based on the length of time that the current FTU is subscribed to the product. If the demographic information of historic subscribers for the training data is to be similar to the demographic information of the current FTU, the training data is traditionally limited to other FTUs that are subscribed for approximately the same amount of time as the current FTU and matching other demographic information (such as location, type of subscriber, and so on) and behavior indicators. For example, if a current FTU is subscribed to the product for 4 days, the training data may be traditionally limited to other FTUs subscribed to the product for 4 days (and also have other demographic information and behavior indicators that match the demographic information and behavior indicators of the current FTU).

The accuracy of the ML model predictions may increase as the size of the relevant training data increases. If the size of the relevant training data is too small, predictions by the ML model may be less accurate than desired. The number of historic non-FTUs with matching demographic information and behavior indicators may be sufficient to generate relevant training data of a sufficient size for training the non-FTU ML classification model since any non-FTU may be used in the comparison (with each data set generated based on a fixed amount of time, such as the last 45 days)). However, the number of historic FTUs with matching demographic information and behavior indicators may be much smaller since each data set is generated based on the amount of time an FTU is subscribed to the product. For example, if the number of matching historic non-FTUs for a current non-FTU for the non-FTU ML classification model is in the tens of thousands, the number of matching historic FTUs for a current FTU for the FTU ML classification model may be in the tens. As such, traditional means of generating the training data may be unable to generate relevant training data of a sufficient size for training the FTU ML classification model.

In some implementations, historic subscriber data for historic subscribers with matching demographic information (other than the length of the subscription being a same amount of time as the current FTU) and matching behavior indicators may be used in the training data. For example, a subset of historic subscribers may match the location of the current FTU, the type of the current FTU, and so on, and may approximately match the number of invoices generated using the product and other interactions with the product as the current FTU, but the subset of historic subscribers may have been subscribed to the product for longer than the current FTU. As such, subscriber data from matching historic subscribers independent of how long the historic subscriber has been subscribed to the product may be used in the training data. In this manner, subscriber data from one or more non-FTUs as well as from one or more FTUs may be used in the training data.

As noted above, a behavior indicator includes a plurality of values, which may be perceived as time series data that is time variant. For the data sets of the training data to include a consistent metric of each behavior indicator across the matching historic subscribers, a behavior indicator for each data set in the training data may include an aggregation over a same amount of time as the current FTU is subscribed to the product. For example, if the current FTU is subscribed to the product for 4 days, the pre-processing engine 140 aggregates, for each historic subscriber subscribed to the product for at least 4 days, the first 4 daily values of each behavior indicator from when the historic subscriber activated its subscription. In this manner, each data set is based on aggregating values of each behavior indicator over a same amount of time. Comparing a behavior indicator between a historic subscriber and a current subscriber (such as the current FTU) may include comparing the aggregated values for the behavior indicator between the historic subscriber and the current subscriber. The behavior indicator may match if the aggregated values approximately equal each other.

If the subscriber data is updated daily (or another suitable period), the data sets may be updated based on an updated aggregation of the behavior indicators. For example, for a next day that a current FTU is subscribed to the product for a total of 5 days, the data sets of historic subscribers may be updated by aggregating the first 5 daily values for each behavior indicator from when the matching historic subscriber subscribed to the product. In this manner, the amount of time may be perceived as a window with a fixed starting position that grows in size as time passes and the amount of time that the current FTU is subscribed to the product grows. The data sets with the matching demographic information and behavior indicators (which are aggregated for an amount of time that the current FTU is subscribed to the product) may be provided to the FTU ML classification model as training data for training the model for an FTU subscribed to the product for the amount of time. Since data sets for non-FTUs as well as FTUs may be used for training data, the size of the training data should be sufficient for training the FTU ML classification model.

To note, if data sets are periodically updated (such as daily) based on new values of the behavior indicators (with the behavior indicators being time variant based on the values), an originally matching subscriber to a current subscriber may no longer match the current subscriber based on the updates to the behavior indicators. Similarly, an originally unmatching subscriber to a current subscriber based on one or more behavior indicators not matching may match the current subscriber after the update to the behavior indicators of the data sets. As such, the group of matching subscribers to be included in the training data for the ML classification model may change over time.

In some implementations, the system 100 is configured to bin the predicted likelihoods generated by the ML classification model 150 into a plurality of bins. Binning may be performed by the ML model 150 or another suitable component of the system 100. For example, a predicted likelihood may be a propensity score from 0 to 1 indicating a probability as to whether a current subscriber is to be retained. 0 may indicate that the current subscriber is to be retained, and 1 may indicate that the subscriber is not to be retained. Each propensity score may be binned into one of a plurality of bins based on the distribution of the propensity scores generated by the ML classification model 150 for a plurality of subscribers. For example, the system 100 may bin a propensity score into one of 100 bins, with each bin representing a percentage value associated with a confidence in retaining the subscriber. In an example of binning a propensity score into a bin based on a distribution of the plurality of propensity scores generated, the ML classification model 150 of the system 100 may be configured to generate a propensity score (including a first propensity score) each day for each of a plurality of current subscribers. The system 100 compares the first propensity score to the other propensity scores from that day to identify what percentage of propensity scores is greater than the first propensity score or what percentage of propensity scores is less than the first propensity score. Which of the 100 bins is directly related to the percentage of propensity scores from that day that are greater than or that are less than the first propensity score. For example, if 100 propensity scores (including the first propensity score) are generated for a day and 42 of the propensity scores are less than the first propensity score (with 57 propensity scores being greater than the second propensity score), the system 100 may place the first propensity score into bin 43 out of 100.

The use of bins may account for drift or changes in the propensity scores that may occur over time. For example, an overall subscriber retention rate may increase over time. As a result, the propensity scores (with 0 indicating that the subscriber is to be retained and 1 indicating that the subscriber is not to be retained) may generally decrease over time. Binning the propensity scores based on a distribution of propensity scores generated around the same time allows for a propensity score in a specific bin and from a specific day to correspond to a propensity score in the same bin but from any other day in the future or in the past. As used herein, a predicted likelihood may include the propensity score or may include the bin to which the propensity score is assigned. With the predicted likelihood stored in a searchable database 120, the system 100 may identify and indicate a group of subscribers based on a range of predicted likelihoods (such as a range of propensity scores or a range of bins).

In some implementations, in addition to the system 100 being configured to generate a predicted likelihood (such as by the ML model 150), the system 100 may be configured to identify one or more actions to be performed based on the predicted likelihood, one or more behavior indicators to be adjusted to adjust the predicted likelihood, or one or more actions to be taken to adjust the one or more behavior indicators. The recommendation model 160 may be configured to identify one or more actions to be performed based on the predicted likelihood, one or more behavior indicators to be adjusted to adjust the predicted likelihood, or one or more actions to be taken to adjust the one or more behavior indicators.

For example, the ML model 150 may generate a prediction that a subscriber has a higher than desired likelihood to not be retained (such as a propensity score being greater than a threshold (such as greater than .7) or the propensity score being binned into one of a top number of bins (such as in one of the bins from bin 70 to bin 100)). The recommendation model 160 may use an association of actions to a range of predicted likelihoods to identify an action to be performed for the subscriber. In some implementations, the database 120 may include a list of actions, with each action associated with a specific range of predicted likelihoods. For example, for 100 bins, bins 0-30 may be associated with no action (as the subscriber is likely to be retained), bins 31-69 may be associated with the entity reaching out to the subscriber via email to provide information regarding support or other aspects of the product that may be beneficial to the subscriber, and bins 70-100 may be associated with a phone call or other live interaction with the subscriber (as the subscriber is likely not to be retained without intervention). The recommendation model 160 may use the list stored on the database 120 to identify an action to be performed for a current subscriber based on the predicted likelihood generated by the ML model 150 for the subscriber.

In another example, the recommendation model 160 identifies one or more behavior indicators to be adjusted to adjust the predicted likelihood generated by the ML model 150. One or more of the behavior indicators for a current subscriber may be adjustable based on actions performed for the current subscriber. For example, the number of invoices being generated using QBO may be increased if a tutorial or other help in using QBO is provided to the subscriber. In another example, the number of times that a subscriber logs into QBO may be increased if relevant communications regarding the product (such as in emails, text messages, or phone calls) from the entity to the subscriber are increased. In a further example, the number of actions performed by a subscriber who rarely interacts with QBO may be increased if the layout of QBO on the subscriber's display is adjusted to a simplified format to make simple operations in the product more understandable. While one or more of the behavior indicators may be adjustable, in some implementations, one or more other behavior indicators may not be adjustable. For example, if a behavior indicator indicates whether a subscriber logs in each day and the subscriber logs in everyday using an automated application or other means that does not change over time, such a behavior indicator may be considered to not be adjustable.

For a specific product associated with one or more behavior indicators, the system 100 may obtain an indication of at least one of the one or more behavior indicators that are adjustable. For example, a local user may indicate which behavior indicators may be adjustable based on actions taken for the subscriber. In another example, a system providing the subscriber data may indicate which behavior indicators may be adjustable. In another example, which behavior indicators are adjustable may be defined in the recommendation model 160 that are obtained from a programmer or other user when building the recommendation model 160. Which behavior indicators are adjustable may be for a specific subscriber, may be for a subset of subscribers, or may be for all subscribers.

Since the training data includes a plurality of behavior indicators and demographic information of data sets of historic subscribers used to train an ML classification model and a plurality of behavior indicators and demographic information of a current subscriber are used to generate a prediction by the trained ML classification model, some mechanism to determine which of the adjustable behavior indicators most impact the prediction or which of the adjustable behavior indicators are to be adjusted to increase the predicted likelihood of retaining the subscriber may be desired (such as through the generation of Shapely values (also referred to as SHAP values) as described herein).

The recommendation model 160 may be configured to identify a behavior indicator's impact on the predicted likelihood. In some implementations, identifying a behavior indicator's impact on the predicted likelihood by the recommendation model 160 is based on a SHAP value generated for the behavior indicator. The recommendation model 160 may be configured to adjust at least one behavior indicator to generate an adjusted subscriber data for a current subscriber, provide the adjusted subscriber data (with the adjusted behavior indicator) to the ML classification model, generate an adjusted predicted likelihood using the ML classification model, and compare the adjusted predicted likelihood to the previously generated predicted likelihood. The behavior indicators that are adjusted may be the at least one behavior indicator associated with the highest SHAP value that is indicated as being adjustable.

As noted above, the training data to train a ML classification model may include data sets of historic subscribers with matching demographic information and matching behavior indicators. If a behavior indicator for the current subscriber is adjusted, which historic subscribers with a behavior indicator that matches the adjusted behavior indicator of the current subscriber may change. As a result, a different plurality of historic subscribers' data sets may be used in again training the ML classification model to generate a new prediction for the current subscriber. In some implementations, adjustment of the at least one behavior indicator, generation of an adjusted predicted likelihood based on the adjusted behavior indicator (which may include training the ML classification model using a different training data based on the adjusted behavior indicator), and comparing the predicted likelihoods for the current subscriber may be performed in an iterative manner so as to identify a desired predicted likelihood (such as a highest predicted likelihood from all of the generated predicted likelihoods).

Adjusting the at least one behavior indicator may include adjusting only one behavior indicator during each iteration or adjusting codependent behavior indicators during each iteration. The recommendation model 160 may identify which behavior indicators are to be adjusted via one or more actions performed for the current subscriber by comparing the behavior indicators for the highest predicted likelihood and the behavior indicators for the original predicted likelihood to determine which behavior indicators have been adjusted.

As noted above, which behavior indicators that are adjusted in an iterative manner may be identified based on each behavior indicator's impact on a predicted likelihood. In some implementations, identifying a behavior indicator's impact on a predicted likelihood may be based on SHAP values. For example, the recommendation model 160 may include the SHAP library (which may be in the Python programming language), which is used to cause the model 160 to generate a SHAP value for each behavior indicator. The SHAP value indicates the impact of a behavior indicator on a prediction. The SHAP values may be used to select which behavior indicators are to be adjusted. For example, the top five SHAP values for behavior indicators that are adjustable may be adjusted in an iterative manner (which may be adjusted one at a time or in any other suitable manner). If the ML classification model is built using the XGBoost library, the prediction output of the XGBoost library may be provided directly to a recommendation model 160 built using the SHAP library (as the interfaces of the two libraries are able to interact with each other without additional formatting of outputs from the libraries).

In another example, the recommendation model 160 identifies one or more actions to be performed based on the at least one behavior indicator to be adjusted. In some implementations, the list of behavior indicators that are adjustable also may include one or more actions associated with each behavior indicator (such as specific communications to the subscriber causing an adjustment to the number of times that the subscriber logs into the product, a free tutorial being offered causing an adjustment to the number of invoices being generated, and so on). The recommendation model 160 may identify one or more actions to be performed based on the list and the behavior indicators identified as to be adjusted.

The output of the recommendation model 160 (such as an indication of one or more actions or of one or more behavior indicators to be adjusted) may be stored in the database 120 or another suitable memory of the system 100, may be provided to a user (such as a user of the entity tasked with determining how to increase subscriber retention), may be provided to another system, or may be used in any other suitable manner to cause one or more actions to be performed. For example, if one of the actions to be performed is an automated email or a prerecorded tutorial, the system 100 may generate instructions to cause the system 100 or another system coupled to the system 100 to send the automated email to the subscriber or to provide a link to the prerecorded tutorial per automated email or text message to the subscriber.

While the pre-processing engine 140, the ML model 150, and the recommendation model 160 are depicted as separate components of the system 100 in Figure 1, the components 140-160 may be a single component, may include additional components, may include software including instructions stored in memory 135 or the database 120, may include application specific hardware (e.g., one or more ASICs), or a combination of the above. As such, the particular architecture of the system 100 shown in Figure 1 is but one example of a variety of different architectures within which aspects of the present disclosure may be implemented. For example, in other implementations, components of the system 100 may be distributed across multiple devices, may be included in fewer components, and so on. While the examples herein are described with reference to system 100, any suitable system may be used to perform the operations described herein.

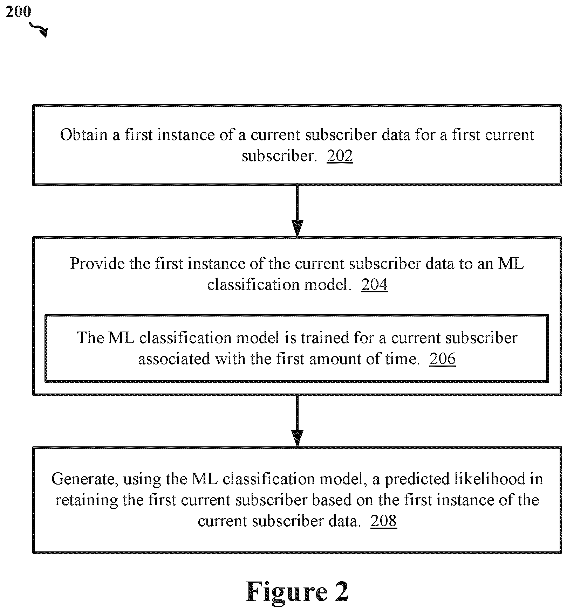

Referring first to operations in generating a predicted likelihood for a current subscriber, Figure 2 shows an illustrative flow chart depicting an example operation 200 for generating a predicted likelihood of retaining a first current subscriber to a product, according to some implementations. The example operation 200 is described as being performed by the system 100 for clarity, but any suitable system may be used to perform the example operation 200. In addition, the first current subscriber is a FTU in the example, but any suitable type of subscriber may be used.

At 202, the system 100 obtains a first instance of a current subscriber data for a first current subscriber. The first current subscriber is subscribed to a product for a first amount of time. In some implementations, the first amount of time is less than a threshold amount of time used to demarcate an FTU from a non-FTU. In this manner, the first current subscriber is an FTU. The current subscriber data may be obtained by the interface 110 of the system 100, such as described above. The current subscriber data may be stored in the database 120 or another suitable memory of the system 100. In some implementations, a first instance is an instance of when the subscriber data is periodically provided to the system 100. For example, the first instance may be the subscriber data including daily values of behavioral indicators for the day the first amount of time from when the subscription was activated. In a specific example, if the first current subscriber is subscribed to the product for 5 days, the first instance of the current subscriber data is the current subscriber data at day 5 of the subscription. If the subscriber data is data obtained in real time, the first instance of the current subscriber data may be the current subscriber data for the current day. While not shown, the system 100 (such as the pre-processing engine 140) may format the current subscriber data into a format to be used by the ML model 150. In some implementations, formatting the subscriber data may include converting transactions in a transaction list to daily values of a behavior indicator (such as described above).

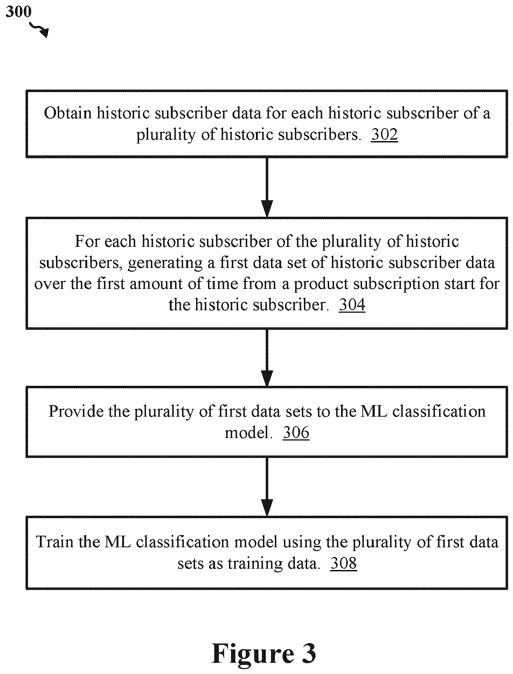

At 204, the system 100 provides the first instance of the current subscriber data to an ML classification model. The ML classification model may be the FTU ML classification model or the non-FTU ML classification model of the ML model 150. The ML classification model is trained for a current subscriber associated with the first amount of time (206). In other words, the ML classification model may be trained for a current subscriber that is subscribed to the product for the first amount of time (such as the first current subscriber). In an example for FTUs, if the amount of time is 5 days, an FTU ML classification model may be trained for current subscribers subscribed to the product for 5 days. In this manner, the ML classification model may provide more accurate predictions for subscribers subscribed to the product for the first amount of time (such as for 5 days). If the first current subscriber is a non-FTU (and the first amount of time is greater than the demarcation amount of time used to separate FTUs from non-FTUs (such as 62 days)), a non-FTU ML classification model may be trained for current subscribers subscribed to the product for greater than the demarcation amount of time (such as 62 days). As noted above, an FTU ML classification model and a non-FTU ML classification model of ML model 150 may be the same ML classification model before training, but different training data may be used in training the ML classification models to cause the models to differ from each other. Example implementations of training an ML classification model are described in more detail below with reference to Figure 3.

The ML classification model may be configured to ingest and use a first instance of current subscriber data in a specific format. For example, the first instance of current subscriber data is to be in a data set in a specific format to be ingested by the ML classification model. While not depicted in Figure 2, the system 100 (such as the pre-processing engine 140) may generate a data set of the first instance of current subscriber data, with the data set being provided to the ML classification model in step 204. Generating a data set may be performed as described above in generating data sets for a subscriber for an ML classification model. In some implementations, the system 100 (such as the pre-processing engine 140) gathers the demographic information (such as from account information provided by another system managing user accounts) and one or more behavior indicators, and the system 100 places the demographic information and the one or more behavior indicators into a data set in a format readable by the ML model 150. For example, if the ML model 150 is built using the XGBoost library in Python, the ML model 150 may be configured to ingest JSON objects, with each object including one or more data sets. The data sets may have a predefined format for values of subscriber data. For example, for a data set for a subscriber, a first set of values may be associated with demographic information of the subscriber, and a second set of values may be associated with one or more behavior indicators of the subscriber. The system 100 (such as the pre-processing engine 140) may fill the first set of values of the data set with the obtained demographic information and may fill the second set of values of the data set with the obtained behavior indicators from the first instance of current subscriber data. The data set may be stored in the database 120 after being generated by the system 100.

If the data set is to be updated periodically (such as daily after obtaining a new instance of current subscriber data), some of the demographic information may remain static while one or more behavior indicators may be adjusted. As such, updating the data set (or generating a new data set) for a first current subscriber may include keeping a portion or all of the first set of values in the data set that are associated with the demographic information the same while updating the second set of values in the data set that are associated with the one or more behavior indicators. Generating a data set may be performed as described above and is also described in more detail below with reference to Figure 3.

At 208, the system 100 generates, using the ML classification model, a predicted likelihood in retaining the first current subscriber based on the first instance of the current subscriber data. For example, the data set associated with the first instance of current subscriber data is provided as an input to the trained ML classification model to be used for the first current subscriber. The trained ML classification model processes the data set and generates a predicted likelihood indicating whether the first current subscriber is to be retained. The predicted likelihood may be stored in the database 120 or another suitable memory, may be binned into one of a plurality of bins, or may otherwise be used by the system 100.

While not depicted in Figure 2, in some implementations, the system 100 (such as the ML model 150 or another suitable component of the system 100) may bin the predicted likelihood into one of a plurality of bins based on a distribution of predicted likelihoods for a plurality of current subscribers including the first current subscriber. Binning the predicted likelihood may be performed as described above. For example, the ML classification model may generate a propensity score in a range from 0 to 1 for each of a plurality of subscribers, and the system 100 may bin each propensity score into one of 100 bins based on the distribution of the plurality of propensity scores. Binning and using the bin to indicate the likelihood that a current subscriber is to be retained allows for a current subscriber's probability to be retained to be indicated with reference to other current subscribers' probabilities to be retained. As such, the use of binning may compensate for drift or overall variations in the propensity scores that may occur over time (such as propensity scores rising in general over time).

If binning is used, the system 100 may use the bin associated with the predicted likelihood for the first current subscriber to identify one or more actions to be performed for the first current subscriber. For example, propensity scores may be in a range from 0 to 1 (with 0 indicating that a current subscriber is to be retained and 1 indicating that a current subscriber is not to be retained). Each propensity score may be binned into one of 100 bins (with each bin being conceptualized as a percentage point). Bin 1 may indicate that a current subscriber is to be retained, and bin 100 may indicate that a current subscriber is not to be retained. A range of bins may be associated with one or more actions to be performed for the current subscribers associated with the bins in the range of bins. For example, current subscribers with propensity scores in bins 70-100 may be associated with a high likelihood of not being retained. The system 100 may be configured to identify the current subscribers based on the range of bins and perform one or more operations defined for the range of bins. For example, the system 100 may send an automated message, e-mail or other communication to each of the identified subscribers. In another example, the system 100 may initiate a phone call with the current subscriber, and the phone call may be forwarded to an agent of the entity providing the product in attempts to retain the subscriber. In a further example, the system 100 may generate a subscription offer (such as a temporary reduction in fees or a free increase in subscription level or functionality) to be provided to the current subscriber. In another example, the system 100 may indicate the identified subscribers to a user. In this manner, the user may determine one or more additional actions to be performed to attempt to retain the current subscriber.

Referring back to the ML classification model being training for a current subscriber associated with the first amount of time (206 in Figure 2), Figure 3 shows an illustrative flow chart depicting an example operation 300 for training an ML classification model, according to some implementations. Training the ML classification model (which may be included in the ML model 150) may be performed by the system 100. The ML classification model depicted in the example operation 300 of Figure 3 is the ML classification model to be used in the example operation 200 of Figure 2. The ML classification model in the example operation 300 is described as being an FTU ML classification model (for which the first current subscriber depicted in operation 200 of Figure 2 is an FTU).

The ML classification model is trained for a current subscriber associated with a first amount of time. The first amount of time is the amount of time that the first current subscriber depicted in operation 200 of Figure 2 is subscribed to the product. If the first current subscriber is an FTU, the ML classification model may be trained to generate predictions for current subscribers subscribed to the product for the first amount of time. For example, the ML classification model may be trained to generate a prediction for any current subscriber subscribed to the product for the same number of days as the first current subscriber and that have similar demographic information and behavior indicators as the demographic information and behavior indicators for the first current subscriber.

To note, if the first current subscriber is a non-FTU, the amount of time that the first subscriber is subscribed to the product is greater than a demarcation amount of time to separate FTUs from non-FTUs. For example, if 62 days is the amount of time used to separate FTUs from non-FTUs (with FTUs being subscribed to the product for less than 62 days), the amount of time that a non-FTU is subscribed to the product is greater than 62 days. As such, the first amount of time may be set to a defined amount of time (such as 45 days).

Training the ML classification model for a current subscriber (that is an FTU) associated with a first amount of time includes, for each historic subscriber of a plurality of historic subscribers that are subscribed to the product for an amount of time longer than the first amount of time, obtaining historic subscriber data for the historic subscriber (302) and generating a first data set of historic subscriber data over the first amount of time from a product subscription start for the historic subscriber (304).

Obtaining historic subscriber data for each historic subscriber of a plurality of historic subscribers in step 302 may include obtaining the subscriber data from a system managing subscriber accounts, from transaction logs including transactions for historic subscribers, or from stored subscriber data stored at the system 100 (such as for subscriber data used previously and stored in the database 120). The interface 110 of the system 100 obtaining historic subscriber data for a plurality of historic subscribers may be performed as described above. The obtained historic subscriber data may be stored in the database 120, which is accessed by the system 100 to use the historic subscriber data for training the ML classification model. The plurality of historic subscribers may be only a portion of the entirety of historic subscribers. For example, as time passes, subscriber data for previous subscribers may become less relevant for predictions for current subscribers. As such, the plurality of historic subscribers may be limited to current subscribers and previous subscribers that were subscribed to the product within a threshold time period (such as within the last five years). In another example, the historic subscriber data may be filtered based on demographic information. For example, if the first current subscriber is an individual (such as being self-employed), the plurality of historic subscribers may not include large or small businesses. If the first current subscriber is located in Canada, the plurality of historic subscribers may not include subscribers located outside of Canada or, alternatively, outside of North America. In this manner, the historic subscriber data may be for historic subscribers with similar demographic information as the first current subscriber. Furthermore, the historic subscriber data may be filtered based on behavior indicators. For example, if the first current subscriber generated 140 invoices in aggregate over the first amount of time, the plurality of historic subscribers may not include subscribers that generated a number of invoices outside of, e.g., 130-150 invoices over the beginning first amount of time of their subscriptions to the product.

Filtering historic subscribers to identify the plurality of historic subscribers to be used may be performed by the pre-processing engine 140 or another suitable component of the system 100 using historic subscriber data stored in the database 120 to compare demographic information and behavior indicators between subscribers. For example, the pre-processing engine 140 filters historic subscribers to determine the plurality of historic subscribers whose historic subscriber data is used to generate the training data for training the ML classification model. The pre-processing engine 140 may begin comparing each historic subscriber's demographic information and behavior indicators to the first current subscriber's demographic information and behavior indicators (as well as any other constraints to be placed on the plurality of historic subscribers (such as whether a previous subscriber was subscribed to the product within the last five years)). If the demographic information and behavior indicators match and any other existing constraints are met, the historic subscriber is included in the plurality of historic subscribers. In some implementations, the pre-processing engine 140 may identify a defined number of historic subscribers and stop. For example, the plurality of historic subscribers may be limited to 1,000 subscribers. Once 1,000 subscribers are identified, the pre-processing engine 140 may stop identifying additional historic subscribers. In some implementations, the pre-processing engine 140 may identify historic subscribers for a defined amount of time (such as for 10 minutes). In some implementations, historic subscribers may be categorized based on similar demographic information and constraints such that the plurality of historic subscribers is based on a category to which the first current subscriber belongs.

Additionally or alternatively, another system (such as the system managing subscriber accounts) may perform the filtering before providing the historic subscriber data to the system 100. In some other implementations, the plurality of historic subscribers to be used in operation 300 may be the entirety of historic subscribers. While some examples are provided, the plurality of historic subscribers may be determined in any suitable manner.

At 304, the system 100 (such as the pre-processing engine 140) generates, for each historic subscriber of the plurality of historic subscribers, a first data set of historic subscriber data over the first amount of time from a product subscription start for the historic subscriber. As noted above, if the first current subscriber is an FTU, there may not be a sufficient number of other FTUs subscribed to the product for the same first amount of time to generate relevant training data of a sufficient size. Therefore, historic subscriber data for historic subscribers subscribed to the product for more than the first amount of time may be included in the training data an FTU ML classification model. In using historic subscriber data for a historic subscriber that is subscribed to the product longer than the first amount of time, the historic subscriber data from the first amount of time of when the historic subscriber was first subscribed to the product is used to generate the data set. For example, if the first amount of time is ten days (meaning the first current subscriber has been subscribed to the product for ten days), the historic subscriber data for the first ten days of the historic subscriber's subscription is used to generate the data set for the historic subscriber. If the historic subscriber data includes one or more behavior indicators including daily values associated with specific subscriber interactions with the product (such as the number of invoices generated daily using QBO), the first ten values of each behavior indicator may be used to generate the first data set.

Generating a first data set for each historic subscriber may be performed as described above in generating data sets for historic subscribers for an ML classification model. In some implementations, the system 100 (such as the pre-processing engine 140) gathers the demographic information (such as from account information provided by another system managing user accounts) and one or more behavior indicators, and the system 100 places the demographic information and the one or more behavior indicators into a data set in a format readable by the ML model 150. For example, if the ML model 150 is built using the XGBoost library in Python, the ML model 150 may be configured to ingest JSON objects, with each object including one or more data sets. The data sets may have a predefined format for values of subscriber data (such as a vector or another suitable format). For example, for a data set for a historic subscriber, a first set of values may be associated with demographic information of the historic subscriber, and a second set of values may be associated with one or more behavior indicators of the historic subscriber. The system 100 (such as the pre-processing engine 140) may fill the first set of values of the data set with the obtained demographic information and may fill the second set of values of the data set with the obtained behavior indicators.

The operations in generating a data set may be based on whether the first amount of time is greater than the demarcation amount of time to separate FTUs from non-FTUs (such as whether a subscriber has been subscribed to the product for less than 62 days). Step 304 is with reference to the first amount of time being less than the demarcation amount of time such that the first current subscriber is an FTU. As noted above, the ML model 150 may include an FTU ML classification model and a non-FTU ML classification model. For example, the ML model 150 may include a first gradient boosted tree based model trained for generating predictions for one or more FTUs and may include a second gradient boosted tree based model trained for generating predictions for one or more non-FTUs. While the ML model 150 including one ML classification model for each type of subscriber is described, the ML model 150 may include any number of ML classification models or other types of ML models. For example, an ML classification model may exist for each current subscriber.

If the first current subscriber in example operation 200 is an FTU, the FTU ML classification model is used to generate a predicted likelihood for the first current subscriber. As such, the operations to generate the data sets of the training data used to the train the FTU ML classification model is based on the first current subscriber being an FTU.

Referring to the non-FTU ML classification model used for a first current subscriber that is a non-FTU, generating a data set for a non-FTU may be based on a static amount of time in the past that the non-FTU is subscribed to the product. For example, the first current subscriber may be subscribed to the product for more than 62 days. As such, the last 45 days of subscriber data for a subscriber is used in generating the data set. Generating a data set of subscriber information for a subscriber includes, for each behavior indicator of one or more behavior indicators, aggregating a plurality of values of the behavior indicator across the amount of time. In this manner, the data set for training the non-FTU ML classification model is tied to the present date of the subscription for the subscriber and looking back a fixed amount of time (such as 45 days back).

Alternatively, data sets for training the FTU ML classification model is tied to a starting date of the product subscription and looking forward the amount of time that the first current subscriber is subscribed to the product. The amount of time to look forward may vary as time passes (and the amount of time that the first current subscriber is subscribed to the product grows). As noted above, generating a data set of subscriber information for a subscriber includes, for each behavior indicator of one or more behavior indicators, aggregating a plurality of values of the behavior indicator across the amount of time. In a specific example, if the first amount of time is 20 days (meaning that the first current subscriber has been subscribed to the product for 20 days and is an FTU), the first 20 daily values of a behavior indicator may be aggregated to generate the value to be included in the data set for the behavior indicator. For the plurality of historic subscribers, a plurality of first data sets may be generated by the system 100 (such as the pre-processing engine 140). The plurality of first data sets is included in the training data for training the ML classification model.

At 306, the system 100 provides the plurality of first data sets to the ML classification model. At 308, the system 100 trains the ML classification model using the plurality of first data sets as training data. As noted above, the first data sets may differ based on whether the first current subscriber is an FTU or a non-FTU. In this manner, even if the ML classification model before training is the same for non-FTUs and FTUs, the ML classification model may differ as a result of the different data sets that may be used for training the ML classification model (such as to generate an FTU ML classification model and to generate a non-FTU ML classification model from the same untrained ML classification model). As noted above, training the ML classification model may be performed in any suitable manner.

The current subscriber data for a first current subscriber may be periodically updated. For example, new daily values of the behavior indicators for the first current user may be updated daily. In some implementations, the system 100 is configured to periodically generate, using the ML classification model, a predicted likelihood of the first current subscriber based on the updated current subscriber data. For example, a new predicted likelihood may be generated each day based on the new daily values of the behavior indicators.

Periodically generating the predicted likelihood includes obtaining an instance of current subscriber data for the first current subscriber (with the instance of current subscriber data being associated with a unique amount of time that the first current subscriber is subscribed to the product). For example, if a predicted likelihood is to be generated daily and the first amount of time is 3 days in performing operation 200, the unique amount of time associated with the next instance of current subscriber data is 4 days, and for the next instance is 5 days, and so on. In this manner, the system 100 is to generate a predicted likelihood for day 3, day 4, day 5, and so on of the first current subscriber's subscription to the product. Obtaining the instance of current subscriber data may be the same as described above with reference to step 202 in Figure 2.

After obtaining the instance of current subscriber data, the system 100 provides the instance of current subscriber data to the ML classification model. The ML classification model may be trained for a current subscriber associated with the unique amount of time. For example, if the first amount of time is 3 days, the ML classification model is trained to generate a prediction based on a subscription length of time being 3 days. The next day, the amount of time is 4 days, and the ML classification model is trained to generate a prediction based on a subscription length of 4 days.

Training the ML classification model based on the unique amount of time may be similar to as described with reference to operation 300 in Figure 3. For example, for each historic subscriber of the plurality of historic subscribers, the system 100 generates a data set of historic subscriber data over the unique amount of time from the product subscription start for the historic subscriber. Generating the data set may include updating the previously generated data set for the historic subscriber or generating a new data set for the historic subscriber. The generated data set includes aggregating values of each behavior indicator over the unique amount of time. For example, when the unique amount of time is 4 days, the first 4 daily values of a behavior indicator are aggregated to generate the value associated with the behavior indicator in the data set.

As noted above, the plurality of historic subscribers whose data sets are to be included in the training data may change as a result of the new or updated data sets. For example, if which historic subscribers to be included in the plurality of historic subscribers is based on the behavior indicators of the historic subscriber matching the behavior indicators of the first current subscriber, and the behavior indicators may change over time with new values for each behavior indicator, a previously matching historic subscriber may no longer match and a previously non-matching historic subscriber may match as a result of the changes to the behavior indicators. In some implementations, the system 100 compares the updated behavior indicators between historic subscribers and the first current subscriber and adjusts the plurality of historic subscribers to include the historic subscribers matching the first current subscriber based on the comparison each instance that the system 100 is to generate the predicted likelihood for the first current subscriber. For example, the system 100 may compare the updated behavior indicators each day after the new values of the behavior indicators are obtained and the aggregated values for the behavior indicators are generated.

With the plurality of data sets of historic subscriber data over the unique amount of time having been generated for the plurality of historic subscribers, the system 100 provides the plurality of data sets to the ML classification model. The system 100 then trains the ML classification model using the plurality of data sets as training data (such as described above). With ML classification model trained using the training data of the new plurality of data sets, the system 100 generates, using the ML classification model, the new predicted likelihood in retaining the first current subscriber based on the specific instance of current subscriber data. In this manner, the ML classification model may be used to generate a predicted likelihood periodically (such as daily).

At some point, the unique amount of time is greater than the demarcation amount of time to separate FTUs from non-FTUs. For example, the first current subscriber may be considered a non-FTU on day 62 of the subscription. If the system 100 is to generate a predicted likelihood periodically (daily), the system 100 may switch from using an FTU ML classification model to a non-FTU classification model when the first current subscriber becomes a non-FTU (such as on day 62 of the subscription). In this manner, generating the data sets may change from using a variable amount of time looking forward from the subscription start (such as 1 day, 2 days, 3 days, and so on up to 61 days) to a static amount of time looking back from the present date (such as the last 45 days). As a result, which values of a behavior indicator are to be aggregated changes, and thus the data sets to be included in the training data changes.

With the system 100 periodically generating a prediction for a first current subscriber, the predictions may be tracked over time. In some implementations, trends in the predictions (such as the predictions decreasing or increasing over time) may be indicated to a user or may be used to initiate one or more actions for the first current subscriber.

As described above, the system 100 may generate (using the ML model 150) a predicted likelihood for a current subscriber and may identify and initiate one or more actions to be performed based on the predicted likelihood. In some implementations, the system 100 may also identify (using the recommendation model 160) one or more behavior indicators to be adjusted to adjust the predicted likelihood in a desired manner. The system 100 may also identify one or more actions to be taken for the first current subscriber based on the one or more behavior indicators to be adjusted.

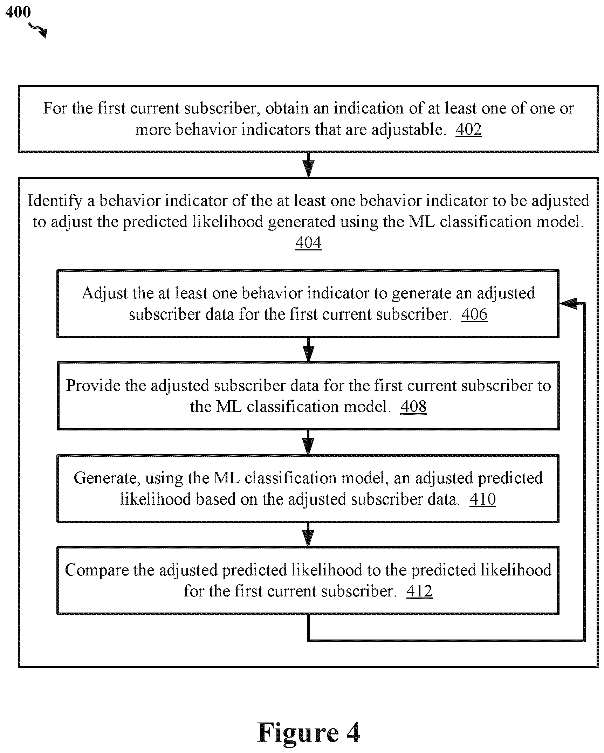

Figure 4 shows an illustrative flow chart depicting an example operation 400 for identifying a behavior indicator to be adjusted to adjust a predicted likelihood, according to some implementations. The operation 400 may be performed by the system 100 (such as by using the recommendation model 160).

At 402, the system 100 obtains, for the first current subscriber, an indication of at least one of one or more behavior indicators that are adjustable. As described above, the current subscriber data for the first current subscriber includes one or more behavior indicators, and at least one of the one or more behavior indicators may be adjustable (such as the subscriber interaction with the product changing as a result of one or more actions performed for the user, such as providing a tutorial or other help in using the product or otherwise contacting the subscriber). For example, a user may provide a list of behavior indicators that may be adjustable. The list may also include one or more actions to be performed for the subscriber that may cause a behavior indicator to vary.

At 404, the system 100 identifies (using the recommendation model 160) a behavior indicator of the at least one behavior indicator to be adjusted by performing one or more actions for the first current subscriber to cause the predicted likelihood generated using the ML classification model to be adjusted. In some implementations, the system 100 adjusts at least one behavior indicator of the current subscriber data for a first current subscriber to attempt to increase a predicted likelihood generated by the ML classification model. For example, if the number of invoices generated using QBO is indicated as being adjustable (such as by providing a tutorial to the current subscriber or providing a simpler graphical user interface for QBO to the current subscriber to encourage the current subscriber to use QBO to generate more invoices), the system 100 may increase the aggregated number of invoices generated in a data set for the first current subscriber to attempt to cause a predicted likelihood generated by the ML classification model to increase based on the increased number of invoices indicated in the adjusted data set.

In some implementations of identifying the behavior indicator to be adjusted, the system 100 adjusts the at least one behavior indicator to generate an adjusted subscriber data for the first current subscriber (406). As noted above, which of the behavior indicators is adjusted to generate the adjusted subscriber data may be based on each behavior indicator's impact on the predicted likelihood as well as being able to be adjusted. For example, the recommendation model 160 may generate a SHAP value for each behavior indicator. A number of behavior indicators that are adjustable (as indicated in step 402) that are associated with the largest SHAP values (or with a SHAP value greater than a threshold) may be adjusted by the system 100. For example, the top 5 adjustable behavior indicators based on SHAP value may be adjusted in step 406. In some implementations, one of the behavior indicators is adjusted at one time. In this manner, any change to the predicted likelihood may be based on the one behavior indicator that is adjusted. The adjustment to the behavior indicator may be in any suitable manner. For example, the aggregated value for the behavior indicator may be incremented or decremented by 1 or another suitable amount up to a maximum amount defined for the behavior indicator (such as uniform maximum for all behavior indicators or a maximum defined by the entity for the specific behavior indicator, which may be indicated in the list of adjustable behavior indicators or in another suitable manner.

In some other implementations, how much a behavior indicator is adjusted may be defined. For example, over a history of emailing subscribers, the entity may determine that that the average number of invoices generated per day increases by y percent when the subscriber receives an email regarding generating invoices. The list from the entity indicating that the behavior indicator of generating invoices is adjustable and is associated with an action to email the subscriber may also indicate that the aggregated value for the behavior indicator is to be increased y percent when adjusting the behavior indicator. If the behavior indicator is associated with multiple actions, the behavior indicator may be adjusted by different amounts based on the action to be performed or the combination of actions to be performed.

At 408, with the at least one behavior indicator adjusted to generate the adjusted subscriber data (such as an adjusted data set), the system 100 provides the adjusted subscriber data for the first current subscriber to the ML classification model. At 410, the system 100 generates, using the ML classification model, an adjusted predicted likelihood based on the adjusted subscriber data. As noted above, if a behavior indicator changes, the historic subscribers whose data sets are to be used for training the ML classification model may change. Based on the historic subscribers to be used changing, the data sets used for training the ML classification model changes. To generate the adjusted predicted likelihood, the ML classification model may be provided the updated data sets (corresponding to the updated group of historic subscribers to be used), and training the ML classification model may be based on the updated data sets.

At 412, the system 100 (such as the recommendation model 160) may compare the adjusted predicted likelihood (based on the adjusted data sets) to the predicted likelihood (based on the original data sets). In some implementations, the ML classification model may generate a propensity score. In comparing propensity scores, the system 100 may calculate a delta in the propensity score (such as the adjusted propensity score divided by the original propensity score).

As indicated by the feedback loop from step 412 to step 406 in Figure 4, the system 100 may be configured to iteratively adjust the at least one behavior indicator to generate iterations of adjusted subscriber data for the first current subscriber, provide each iteration to the ML classification model (which may be trained based on the specific iteration of adjusted subscriber data), and generate an adjusted predicted likelihood using the ML classification model for each iteration.

Each behavior indicator that is adjustable may be associated with a defined number of adjustments and amount of adjustments (such as being incremented a defined number of times or being adjusted for a defined number of actions associated with the behavior indicator). For example, adjusting the number of invoices generated may be associated with three actions A, B, and C, and each action may be associated with a defined adjustment to the behavior indicator. In this manner, the behavior indicator may be adjusted up to seven times by seven different amounts (such as percentage increases to the behavior indicator associated with one of A, B, C, A+B, A+C, B+C, or A+B+C). For a specific number of behavior indicators to be adjusted, the total number of adjustments that may be iterated through by the recommendation model 160 may be the number of adjustments for each behavior indicator multiplied together. For example, if a first behavior indicator may be adjusted seven times and a second behavior indicator may be adjusted five times, the total number of adjustments for the first behavior indicator and the second behavior indicator may be 35 times. The system 100 may adjust the subscriber data 35 times (based on adjusting the first behavior indicator and the second behavior indicator) and use the ML classification model to generate an adjusted predicted likelihood 35 times.

In some implementations, the system 100 may identify the highest predicted likelihood (such as the top 10 highest predicted likelihoods) from the iterations of the adjusted predicted likelihoods. For example, in comparing each adjusted predicted likelihood, the system 100 may calculate a change or a delta in the propensity score from the original propensity score. The system 100 may identify the largest change or delta to the propensity score. The system 100 may also identify a subset of behavior indicators that are adjusted to generate the highest predicted likelihood (such as by comparing the behavior indicators of the original data set to the behavior indicators of the adjusted data set associated with the highest predicted likelihood). The subset of behavior indicators identified by the recommendation model 160 may be the behavior indicator to be adjusted that is identified by the system 100 in step 404.

In some implementations, the system 100 (such as the recommendation model 160) may be configured to identify one or more user actions to be performed to cause the adjustments of the subset of behavior indicators from the current subscriber data to the adjusted subscriber data. For example, referring back to step 406, in some implementations of adjusting the at least one behavior indicator, a list may define the actions that may be taken by a user for the first current subscriber (or for current subscribers in general). Each action may be associated with one or more specific behavior indicators and how much the behavior indicators change based on the user action. As such, each iteration of adjusting the behavior indicators may include the system 100 (such as the recommendation model 160) adjusting the behavior indicators as defined for a specific user action. In this manner, each iteration of adjustments and the subsequent adjusted predicted likelihood generated is associated with a specific user action. The highest predicted likelihoods (such as the highest delta in propensity scores) thus may indicate the user actions having the greatest impact of the predicted likelihood. The one or more user actions to be performed may be the user actions associated with the one or more highest predicted likelihoods.

In some implementations, the system 100 may provide an indication of the one or more user actions. For example, the system 100 may provide a ranked list of user actions. An output to a user may be the top five user actions to be performed as recommended by the recommendation model 160 based on the predicted likelihoods (such as a delta in propensity scores). While some examples are provided of the system 100 adjusting the behavior indicators, identifying behavior indicators to be adjusted, identifying user actions to be performed, and indicating to a user the identified behavior indicators or user actions, the system 100 may perform the above operations using any suitable means. For example, the system 100 may automatically initiate one or more of the user actions (such as sending an automated message to a subscriber). In another example, the identified user actions may be the combination of user actions associated with the changes to the behavior indicators to generate the highest predicted likelihood. In a further example, the predicted likelihood may be a specific bin associated with the propensity score, and each adjusted propensity score may be binned. In this manner, the highest predicted likelihood may be the largest delta between the original bin for the original propensity score to the adjusted bin for the adjusted propensity score.

As described above, a system is configured to predict a likelihood of subscriber retention. In some implementations, the system is also configured to identify one or more actions to be performed based on the prediction, one or more behavioral indicators impacting the prediction or that are to be adjusted, or one or more actions to adjust the one or more behavioral indicators to increase the predicted likelihood of retaining a subscriber. As noted above, the system provides one or more of an indication of the prediction, an indication of the one or more behavioral indicators, or an indication of one or more actions. While the examples describe generating the predictions and other information periodically (such as daily), the system may be configured to determine the prediction or the one or more actions on demand or in any other suitable manner. In some implementations, if the system generates a prediction of a low likelihood in retaining a subscriber (such as the predicted likelihood being within a range of predicted likelihoods) based on a request from a user, the system may begin to periodically generate the predictions or actions (such as once a day) to begin tracking the predictions for the subscriber.

Thus, from one perspective, there have now been described systems and methods of subscriber retention analysis. A system is configured to obtain an instance of a current subscriber data for the first current subscriber subscribed to a product for a first amount of time and configured to provide the first instance of the current subscriber data to a machine learning (ML) classification model. Training the ML classification model is based on a plurality of data sets as training data. Each data set includes an instance of historic subscriber data over the first amount of time of a subscription for a historic subscriber. The system is also configured to generate, using the ML classification model, a predicted likelihood in retaining the first current subscriber based on the first instance of the current subscriber data.

As used herein, a phrase referring to "at least one of' or "one or more of' a list of items refers to any combination of those items, including single members. As an example, "at least one of: a, b, or c" is intended to cover: a, b, c, a-b, a-c, b-c, and a-b-c, and "one or more of: a, b, or c" is intended to cover: a, b, c, a-b, a-c, b-c, and a-b-c.

The various illustrative logics, logical blocks, modules, circuits, and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or any conventional processor, controller, microcontroller, or state machine. A processor also may be implemented as a combination of computing devices such as, for example, a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also can be implemented as one or more computer programs, i.e., one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that can be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Additionally or alternatively, a computer-readable medium can include transient media such as carrier signals and transmission media. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to other implementations without departing from the scope of this disclosure. For example, while the figures and description depict an order of operations to be performed in performing aspects of the present disclosure, one or more operations may be performed in any order or concurrently to perform the described aspects of the disclosure. In addition, or to the alternative, a depicted operation may be split into multiple operations, or multiple operations that are depicted may be combined into a single operation. Thus, the claims are not intended to be limited to the implementations shown herein but are to be accorded the widest scope consistent with this disclosure, the principles, and the novel features disclosed herein.

Further examples of feature combinations taught by the present disclosure are set out in the following numbered clauses: What is claimed is:
1. A computer-implemented method of subscriber retention, comprising:
   obtaining a first instance of a current subscriber data for a first current subscriber, wherein the first current subscriber is subscribed to a product for a first amount of time;
   providing the first instance of the current subscriber data to a machine learning (ML) classification model, wherein training the ML classification model for a current subscriber associated with the first amount of time includes:
      for each historic subscriber of a plurality of historic subscribers that are subscribed to the product for an amount of time longer than the first amount of time:
         obtaining historic subscriber data for the historic subscriber; and
         generating a first data set of historic subscriber data over the first amount of time from a product subscription start for the historic subscriber;
      providing the plurality of first data sets to the ML classification model; and
      training the ML classification model using the plurality of first data sets as training data; and
   generating, using the ML classification model, a predicted likelihood in retaining the first current subscriber based on the first instance of the current subscriber data.
2. The method of clause 1, further comprising:
   binning the predicted likelihood into one of a plurality of bins based on a distribution of predicted likelihoods for a plurality of current subscribers including the first current subscriber.
3. The method of clause 2, further comprising:
   using the bin associated with the predicted likelihood for the first current subscriber to identify one or more actions to be performed for the first current subscriber.
4. The method of any preceding clause, further comprising periodically generating a predicted likelihood for the first current subscriber, including:
   obtaining an instance of current subscriber data for the first current subscriber, wherein the instance of current subscriber data is associated with a unique amount of time that the first current subscriber is subscribed to the product;
   providing the instance of current subscriber data to the ML classification model, wherein training the ML classification model for a current subscriber associated with the unique amount of time includes:
      for each historic subscriber of the plurality of historic subscribers, generating a data set of historic subscriber data over the unique amount of time from the product subscription start for the historic subscriber;
      providing the plurality of data sets of historic subscriber data over the unique amount of time to the ML classification model; and
      training the ML classification model using the plurality of data sets of historic subscriber data over the unique amount of time as training data; and
   generating, using the ML classification model, the predicted likelihood in retaining the first current subscriber based on the instance of current subscriber data.
5. The method of any preceding clause, wherein:
   subscriber data for a subscriber subscribed to the product for an amount of time includes one or more behavior indicators of the subscriber, wherein:
      each behavior indicator of the one or more behavior indicators includes a plurality of values associated with a metric of subscriber interaction with the product; and
      each value of the plurality of values associated with the metric indicates a measurement of the metric for the subscriber for a period of time during the amount of time; and
   generating a data set of subscriber information for the subscriber includes, for each behavior indicator of the one or more behavior indicators, aggregating the plurality of values across the amount of time.
6. The method of clause 5, further comprising:
   for the first current subscriber, obtaining an indication of at least one of the one or more behavior indicators that are adjustable; and
   identifying a behavior indicator of the at least one behavior indicator to be adjusted to adjust the predicted likelihood generated using the ML classification model.
7. The method of clause 6, wherein identifying the behavior indicator of the at least one behavior indicator to be adjusted includes:
   adjusting the at least one behavior indicator to generate an adjusted subscriber data for the first current subscriber;
   providing the adjusted subscriber data for the first current subscriber to the ML classification model;
   generating, using the ML classification model, an adjusted predicted likelihood based on the adjusted subscriber data; and
   comparing the adjusted predicted likelihood to the predicted likelihood for the first current subscriber.
8. The method of clause 7, wherein identifying the behavior indicator of the at least one behavior indicator to be adjusted includes:
   iteratively adjusting the at least one behavior indicator to generate iterations of adjusted subscriber data for the first current subscriber;
   for each iteration of adjusted subscriber data:
      providing the iteration of adjusted subscriber data to the ML classification model; and
      generating, using the ML classification model, an adjusted predicted likelihood based on the iteration of adjusted subscriber data;
   identifying the highest predicted likelihood from the iterations of adjusted predicted likelihoods; and
   identifying a subset of behavior indicators that are adjusted to generate the highest predicted likelihood.
9. The method of clause 8, further comprising:
   identifying one or more user actions to be performed to cause the adjustment of the subset of behavior indicators from the current subscriber data to the adjusted subscriber data, wherein each of the at least one behavior indicator is associated with at least one user action; and
   providing an indication of the one or more user actions.
10. The method of any preceding clause, wherein the ML classification model is a gradient boosted tree model.
11. A system for subscriber retention, the system comprising:
   one or more processors; and
   a memory storing instructions that, when executed by the one or more processors, causes the system to perform operations comprising:
      obtaining a first instance of a current subscriber data for a first current subscriber, wherein the first current subscriber is subscribed to a product for a first amount of time;
      providing the first instance of the current subscriber data to a machine learning (ML) classification model, wherein training the ML classification model for a current subscriber associated with the first amount of time includes:
         for each historic subscriber of a plurality of historic subscribers that are subscribed to the product for an amount of time longer than the first amount of time:
            obtaining historic subscriber data for the historic subscriber; and
            generating a first data set of historic subscriber data over the first amount of time from a product subscription start for the historic subscriber;
         providing the plurality of first data sets to the ML classification model; and
         training the ML classification model using the plurality of first data sets as training data; and
      generating, using the ML classification model, a predicted likelihood in retaining the first current subscriber based on the first instance of the current subscriber data.
12. The system of clause 11, wherein the operations further comprise:
   binning the predicted likelihood into one of a plurality of bins based on a distribution of predicted likelihoods for a plurality of current subscribers including the first current subscriber.
13. The system of clause 12, wherein the operations further comprise:
   using the bin associated with the predicted likelihood for the first current subscriber to identify one or more actions to be performed for the first current subscriber.
14. The system of any of clauses 11 to 13, wherein the operations further comprise periodically generating a predicted likelihood for the first current subscriber, including:
   obtaining an instance of current subscriber data for the first current subscriber, wherein the instance of current subscriber data is associated with a unique amount of time that the first current subscriber is subscribed to the product;
   providing the instance of current subscriber data to the ML classification model, wherein training the ML classification model for a current subscriber associated with the unique amount of time includes:
      for each historic subscriber of the plurality of historic subscribers, generating a data set of historic subscriber data over the unique amount of time from the product subscription start for the historic subscriber;
      providing the plurality of data sets of historic subscriber data over the unique amount of time to the ML classification model; and
      training the ML classification model using the plurality of data sets of historic subscriber data over the unique amount of time as training data; and
   generating, using the ML classification model, the predicted likelihood in retaining the first current subscriber based on the instance of current subscriber data.
15. The system of any of clauses 11 to 14, wherein:
   subscriber data for a subscriber subscribed to the product for an amount of time includes one or more behavior indicators of the subscriber, wherein:
      each behavior indicator of the one or more behavior indicators includes a plurality of values associated with a metric of subscriber interaction with the product; and
      each value of the plurality of values associated with the metric indicates a measurement of the metric for the subscriber for a period of time during the amount of time; and
   generating a data set of subscriber information for the subscriber includes, for each behavior indicator of the one or more behavior indicators, aggregating the plurality of values across the amount of time.
16. The system of clause 15, wherein the operations further comprise:
   for the first current subscriber, obtaining an indication of at least one of the one or more behavior indicators that are adjustable; and
   identifying a behavior indicator of the at least one behavior indicator to be adjusted to adjust the predicted likelihood generated using the ML classification model.
17. The system of clause 16, wherein identifying the behavior indicator of the at least one behavior indicator to be adjusted includes:
   adjusting the at least one behavior indicator to generate an adjusted subscriber data for the first current subscriber;
   providing the adjusted subscriber data for the first current subscriber to the ML classification model;
   generating, using the ML classification model, an adjusted predicted likelihood based on the adjusted subscriber data; and
   comparing the adjusted predicted likelihood to the predicted likelihood for the first current subscriber.
18. The system of clause 17, wherein identifying the behavior indicator of the at least one behavior indicator to be adjusted includes:
   iteratively adjusting the at least one behavior indicator to generate iterations of adjusted subscriber data for the first current subscriber;
   for each iteration of adjusted subscriber data:
      providing the iteration of adjusted subscriber data to the ML classification model; and
      generating, using the ML classification model, an adjusted predicted likelihood based on the iteration of adjusted subscriber data;
   identifying the highest predicted likelihood from the iterations of adjusted predicted likelihoods; and
   identifying a subset of behavior indicators that are adjusted to generate the highest predicted likelihood.
19. The system of clause 18, wherein the operations further comprise:
   identifying one or more user actions to be performed to cause the adjustment of the subset of behavior indicators from the current subscriber data to the adjusted subscriber data, wherein each of the at least one behavior indicator is associated with at least one user action; and
   providing an indication of the one or more user actions.
20. The system of any of clauses 11 to 19, wherein the ML classification model is a gradient boosted tree model.

## Claims

1. A computer-implemented method of subscriber retention, comprising:
obtaining a first instance of a current subscriber data for a first current subscriber, wherein the first current subscriber is subscribed to a product for a first amount of time;
providing the first instance of the current subscriber data to a machine learning (ML) classification model, wherein training the ML classification model for a current subscriber associated with the first amount of time includes:
for each historic subscriber of a plurality of historic subscribers that are subscribed to the product for an amount of time longer than the first amount of time:
obtaining historic subscriber data for the historic subscriber; and
generating a first data set of historic subscriber data over the first amount of time from a product subscription start for the historic subscriber;
providing the plurality of first data sets to the ML classification model; and
training the ML classification model using the plurality of first data sets as training data; and
generating, using the ML classification model, a predicted likelihood in retaining the first current subscriber based on the first instance of the current subscriber data.

2. The method of claim 1, further comprising:
binning the predicted likelihood into one of a plurality of bins based on a distribution of predicted likelihoods for a plurality of current subscribers including the first current subscriber.

3. The method of claim 2, further comprising:
using the bin associated with the predicted likelihood for the first current subscriber to identify one or more actions to be performed for the first current subscriber.

4. The method of any preceding claim, further comprising periodically generating a predicted likelihood for the first current subscriber, including:
obtaining an instance of current subscriber data for the first current subscriber, wherein the instance of current subscriber data is associated with a unique amount of time that the first current subscriber is subscribed to the product;
providing the instance of current subscriber data to the ML classification model, wherein training the ML classification model for a current subscriber associated with the unique amount of time includes:
for each historic subscriber of the plurality of historic subscribers, generating a data set of historic subscriber data over the unique amount of time from the product subscription start for the historic subscriber;
providing the plurality of data sets of historic subscriber data over the unique amount of time to the ML classification model; and
training the ML classification model using the plurality of data sets of historic subscriber data over the unique amount of time as training data; and
generating, using the ML classification model, the predicted likelihood in retaining the first current subscriber based on the instance of current subscriber data.

5. The method of any preceding claim, wherein:
subscriber data for a subscriber subscribed to the product for an amount of time includes one or more behavior indicators of the subscriber, wherein:
each behavior indicator of the one or more behavior indicators includes a plurality of values associated with a metric of subscriber interaction with the product; and
each value of the plurality of values associated with the metric indicates a measurement of the metric for the subscriber for a period of time during the amount of time; and
generating a data set of subscriber information for the subscriber includes, for each behavior indicator of the one or more behavior indicators, aggregating the plurality of values across the amount of time.

6. The method of claim 5, further comprising:
for the first current subscriber, obtaining an indication of at least one of the one or more behavior indicators that are adjustable; and
identifying a behavior indicator of the at least one behavior indicator to be adjusted to adjust the predicted likelihood generated using the ML classification model.

7. The method of claim 6, wherein identifying the behavior indicator of the at least one behavior indicator to be adjusted includes:
adjusting the at least one behavior indicator to generate an adjusted subscriber data for the first current subscriber;
providing the adjusted subscriber data for the first current subscriber to the ML classification model;
generating, using the ML classification model, an adjusted predicted likelihood based on the adjusted subscriber data; and
comparing the adjusted predicted likelihood to the predicted likelihood for the first current subscriber.

8. The method of claim 7, wherein identifying the behavior indicator of the at least one behavior indicator to be adjusted includes:
iteratively adjusting the at least one behavior indicator to generate iterations of adjusted subscriber data for the first current subscriber;
for each iteration of adjusted subscriber data:
providing the iteration of adjusted subscriber data to the ML classification model; and
generating, using the ML classification model, an adjusted predicted likelihood based on the iteration of adjusted subscriber data;
identifying the highest predicted likelihood from the iterations of adjusted predicted likelihoods; and
identifying a subset of behavior indicators that are adjusted to generate the highest predicted likelihood.

9. The method of claim 8, further comprising:
identifying one or more user actions to be performed to cause the adjustment of the subset of behavior indicators from the current subscriber data to the adjusted subscriber data, wherein each of the at least one behavior indicator is associated with at least one user action; and
providing an indication of the one or more user actions.

10. The method of any preceding claim, wherein the ML classification model is a gradient boosted tree model.

11. A system for subscriber retention, the system comprising:
one or more processors; and
a memory storing instructions that, when executed by the one or more processors, causes the system to perform operations comprising:
obtaining a first instance of a current subscriber data for a first current subscriber, wherein the first current subscriber is subscribed to a product for a first amount of time;
providing the first instance of the current subscriber data to a machine learning (ML) classification model, wherein training the ML classification model for a current subscriber associated with the first amount of time includes:
for each historic subscriber of a plurality of historic subscribers that are subscribed to the product for an amount of time longer than the first amount of time:
obtaining historic subscriber data for the historic subscriber; and
generating a first data set of historic subscriber data over the first amount of time from a product subscription start for the historic subscriber; providing the plurality of first data sets to the ML classification model; and
training the ML classification model using the plurality of first data sets as training data; and
generating, using the ML classification model, a predicted likelihood in retaining the first current subscriber based on the first instance of the current subscriber data.

12. The system of claim 11, wherein the operations further comprise:
binning the predicted likelihood into one of a plurality of bins based on a distribution of predicted likelihoods for a plurality of current subscribers including the first current subscriber.

13. The system of claim 12, wherein the operations further comprise:
using the bin associated with the predicted likelihood for the first current subscriber to identify one or more actions to be performed for the first current subscriber.

14. The system of any of claims 11 to 13, wherein the operations further comprise periodically generating a predicted likelihood for the first current subscriber, including:
obtaining an instance of current subscriber data for the first current subscriber, wherein the instance of current subscriber data is associated with a unique amount of time that the first current subscriber is subscribed to the product;
providing the instance of current subscriber data to the ML classification model, wherein training the ML classification model for a current subscriber associated with the unique amount of time includes:
for each historic subscriber of the plurality of historic subscribers, generating a data set of historic subscriber data over the unique amount of time from the product subscription start for the historic subscriber;
providing the plurality of data sets of historic subscriber data over the unique amount of time to the ML classification model; and
training the ML classification model using the plurality of data sets of historic subscriber data over the unique amount of time as training data; and
generating, using the ML classification model, the predicted likelihood in retaining the first current subscriber based on the instance of current subscriber data.

15. The system of any of claims 11 to 14, wherein:
subscriber data for a subscriber subscribed to the product for an amount of time includes one or more behavior indicators of the subscriber, wherein:
each behavior indicator of the one or more behavior indicators includes a plurality of values associated with a metric of subscriber interaction with the product; and
each value of the plurality of values associated with the metric indicates a measurement of the metric for the subscriber for a period of time during the amount of time; and
generating a data set of subscriber information for the subscriber includes, for each behavior indicator of the one or more behavior indicators, aggregating the plurality of values across the amount of time.
